# EUROPEAN PATENT SPECIFICATION

(11) **EP 0 928 391 B1**
(45) Date of publication and mention of the grant of the patent: **24.04.2002**
(21) Application number: 96933873.0
(22) Date of filing: 24.09.1996
(51) Int. Cl.: F16L 37/084

(54) **QUICK CONNECTOR**
SCHNELLKUPPLUNG
CONNECTEUR RAPIDE

(43) Date of publication of application: 14.07.1999
(73) Proprietor: ITT MANUFACTURING ENTERPRISES, INC., Wilmington, Delaware 19801 (US)
(72) Inventor: CARMAN, Anthony, K., Waterford, MI 48329 (US); PONTBRIAND, Duane, J., Metamora, MI 48455 (US); KLINGER, Gary, Warren, MI 48092 (US)
(74) Representative: Fuhlendorf, Jörn, Dipl.-Ing.
(86) International application number: US9615270
(87) International publication number: WO9813640

(56) References cited:
- US-A- 4 966 398
- US-A- 5 069 424
- US-A- 5 354 102
- US-A- 5 360 237
- US-A- 5 485 982

## Description

### - BACKGROUND OF THE INVENTION

This invention generally relates to quick connectors and more particularly to a redundant clip for quick connectors according to the preamble of claim 1.

Quick connectors are known and have been widely used in the art and are used in fluid carrying assemblies such as automobile assembly plants and service centers. More recently, these connectors have been provided in the form of a unitary connector body which is joined with the male end of a mating tube. The recent connectors use an internal connector component which receives an upset bead on the male tube member to retain the male tube member within the unitary connector. These recent connectors utilize either a pair of O-rings or a one-piece seal with multiple ribs to seal the male member with respect to the unitary connector. The O-rings or ribs surround the center male end of the mating tube. These connectors have the disadvantage that if an accidental disconnection occurs, fluid can flow out of the connector body. These connectors have the further disadvantage that an indication as to whether a proper lock connection has been provided is not readily apparent.

US-A-5,069,424 addresses the above problems that occur with single clips. This document discloses a secondary retaining clip which had means for engaging a portion of the housing to releasably lock the secondary retaining clip to the housing. This retaining clip has resilient finger portions which are received within annular grooves in the unitary connector housing. The retaining clip has an inwardly directed portion which will engage the bead of the male tube if it is attempted to be removed. The secondary clip can only be connected if the male tube is properly received within the unitary connector.

One disadvantage of this known connector is that it requires an annular groove to be formed in the housing.

Further, the secondary clip would likely require one or more tools in order to remove the resilient fingers from the annular groove formed in the housing.

From US-A-5,354,102 and US-A-5,360,237 further quick connectors and especially clip designs are known.

### SUMMARY OF THE INVENTION

The present invention provides an improved redundant clip having the features of claim 1 which overcomes the above problems with known quick connects and redundant quick connects and provides other advantages as well.

The presently embodiment of this invention provides a locking clip for use in retaining a male member within a female connector. The clip has a retaining head for engaging a portion of the male member when the male member is in the female connector. A base portion is included on the clip, which is distal from the retaining head, and has spaced members that are received about an outer diameter of the female connector. The spaced body portion members have a cam surface that cams against the female connector to facilitate placing the clip into a locking position for retaining the male member within the female connector.

In the embodiment, the spaced base portion members comprise leg members that have a top edge that defines the cam surface for engaging the female connector at the engaging ledge to facilitate movement of the clip to the clipped position. Further, the leg members have opposed detents to receive the reduced section when the clip is in the clipped position. The embodiment includes a T-shaped configuration at an end of one of the legs and cooperating fingers at the end of the other leg. The T and the fingers are interlocked so the clip is maintained about the female connector housing, even in an unlocked position.

As is typical, the female member has an exterior surface that is contoured to define at least a first section, a reduced diameter second section and a third section that has an outer diameter greater than the second section. The first and second sections have the engaging surface therebetween.

Although the embodiment relies upon the cam surface to facilitate clipping the clip on the female member, in another embodiment, the legs are sufficiently flexible to flex about the second or third sections and ultimately snap about the second section when the clip is clipped in place. This simplifies installation and removal of the clip.

As should be appreciated, the clip can be locked and unlocked without the need for tools. The clip is an exterior clip which is highly reliable and gives a clear indication when the clip is properly fastened. The clip is only properly fastened when the body member of the clip is adjacent and parallel to the body housing. In the embodiment, the mating contour of the inside edge of the body member of the clip with the exterior surface of the housing make a sure indication of proper alignment. It also provides the advantage of a redundant or a secondary clip to ensure against improper installation of the primary clip. A still further advantage is that the clip does not require modification of a standard connector housing, the clip is merely snapped over a reduced portion of the standard housing. The clip is also less expensive to manufacture, easier to clip onto a housing and able to be used in tight spaces. A still further advantage is that the legs of the base are more resilient and can be used on various sizes of connectors. Overall, it is a much more versatile clip than previously available.

The embodiment of the present invention provides an improved secondary or redundant clip for connecting a male tube to a unitary connector or connector housing. In the disclosed embodiment the male tube includes an upset portion and the connector housing has a recess for receiving the male tube and the upset. The connector housing has an exterior surface that is contoured to define at least a first section and second section, with the second section having reduced diameter. As further disclosed in the embodiment, the connector housing includes a primary connector assembly for primarily retaining the tube in the housing.

The embodiment of the clip of the present invention is generally L-shaped and includes a retaining head, a body portion and a base portion. The retaining head is adapted to engage the upset of the male tube when the male tube is positioned within the recess of the connector housing. The retaining head is defined by a pair of spaced fingers ending in engaging ears. The engaging ears extend inwardly with respect to each other to form a reduced space between the fingers. The reduced space has a width which is less that the diameter of the male tube so that the ears have to be biased outwardly to receive the male tube.

The retaining head extends outwardly from the body portion at an angle with respect to the body portion and is spaced from the body portion by a distance slightly greater that the distance between the exterior surface of the connector housing and the recess.

The body portion is defined by a channel having a base and sidewalls. The sidewalls extend generally perpendicular to the base. In the preferred embodiment, the sidewalls have an edge that is contoured to generally mate with the exterior contour of the connector housing.

The base portion is defined by spaced leg members which extend outwardly from the body portion and are preferably joined at their ends. The leg members are spaced apart a distance which is slightly less than the outer diameter of the reduced section of the connector housing so that they bias against the reduced section. In the embodiment, the leg members have first and second spaced detents to receive the reduced section. These detents correspond to the latched and unlatched positions of the clip. Each of the leg members includes a top edge that defines a cam surface for engaging the bottom of the reduced surface to facilitate the insertion of the retaining head into the recess of the connector housing and for locking the clip in place. The cam and leg members act as a lever giving substantial mechanical advantage to insertion of the head portion. The cam surface ends in a locking surface which is adjacent the body portion and is adapted to engage the bottom of the reduced surface when the clip is in the latched position. This engagement provides the needed retention force to retain the tube in the connector.

In use, the clip is mounted to the connector housing by the base member. It is intended that the clip always remain attached to the connector housing and in particular to the reduced section. In the disclosed embodiment, the clip is mounted onto the reduced section by separating the legs and placing the reduced section between them and then snapping the free ends of the legs together. The legs are biased against the reduced section of the connector housing and can slide with respect to the housing.

To use the clip, the first step in locking the male tube with respect to the connector housing is to rotate the clip against the male tube. With slight pressure against the base of the body member, just behind the retaining head, the engaging ears can be forced apart and about tube. Rotation of the clip is facilitated by the interaction of the detent with respect to the reduced section which, in combination, acts as a pivot point. The edge of the base member abuts the base of the second section when the ears are clipped about the tube.

By next applying pressure to the base of the body portion of the clip just behind the base member, the legs slide along the reduced section and the cam surface is caused to cam against the base of the reduced section. It should be appreciated that the ears are biased against the tube and form a second pivot point with respect to the tube. As pressure is applied to the body portion, the ears simultaneously pivot and slide with respect to the tube in the direction of the connector housing as the cam surface is cammed against the base of the reduced section.

After rotation of the clip, the second detent on the legs of the clip engages the reduced section and the retaining head is securely inserted into the connector housing to retain the tube therein. The top edge of the legs abuts the base in this position. In this way, the retention force of the clip or the pull-out strength is determined by the shear strength of the body member at the joinder of the head and base member.

To disconnect the tube from the connector housing, the base member is slid away from the connector housing. The edge and cam abut the base and the retaining head is slid out of the connector housing. A surface on the engaging ears can be pushed by the user to spread open the fingers to release the retaining head from the tube. The clip is then in the unlocked position.

As should be appreciated, the clip can be locked and unlocked without the need for tools. Additionally, the clip remains on the housing so that it is not misplaced and so that it is much easier to ship with the housing. The clip is an exterior clip which is highly reliable and gives a clear indication when the clip is properly fastened. The clip is only properly fastened when the body member of the clip is adjacent and parallel to the body housing, in the preferred embodiment, the mating contour of the inside edge of the body member of the clip with the exterior surface of the housing make a sure indication of proper alignment. It also provides the advantage of a redundant or a secondary clip to ensure against improper installation of the primary clip. A still further advantage is that the clip does not require modification of a standard connector housing, the clip is merely snapped over a reduced portion of the standard housing.

The embodiment described above overcomes some disadvantages associated with the embodiment according to the state of the art. The embodiment according to the state of the art is intended to be tethered to the female connector which requires that the base be fairly long to accommodate closing means. This requires more material and increases costs. Additionally, when connected, the alternative embodiment extends beyond the female clip a considerable distance making the clip difficult to use in tight locations. Further, due to the clip being tethered, the head is shorter to facilitate assembly. This shorter head is not long enough to form a double lock on the upset of the male member at the line of engagement which is defined by the locking fingers of the primary retainer. For the redundant clip to act against the upset, the upset must be outside the locking fingers of the primary retainer. Such a condition only exists when the male member has not been properly inserted or the primary retainer has failed. Still further, the clip requires several steps for assembly.

### BRIEF DESCRIPTION OF THE DRAWINGS

- Figure 1: is a perspective view of the presently preferred embodiment of this invention;
- Figure 2: is a perspective view of a portion of the embodiment of Figure 1;
- Figure 3: is a planar view showing details of the feature illustrated in Figure 2;
- Figure 4: is a partial-cross-sectional illustration of the embodiment of Figure 1 in an unlocked position; and
- Figure 5: is a partial-cross-sectional illustration of the . embodiment of Figure 1 in a locked position.

### DETAILED DESCRIPTION OF TEE PREFERRED EMBODIMENTS

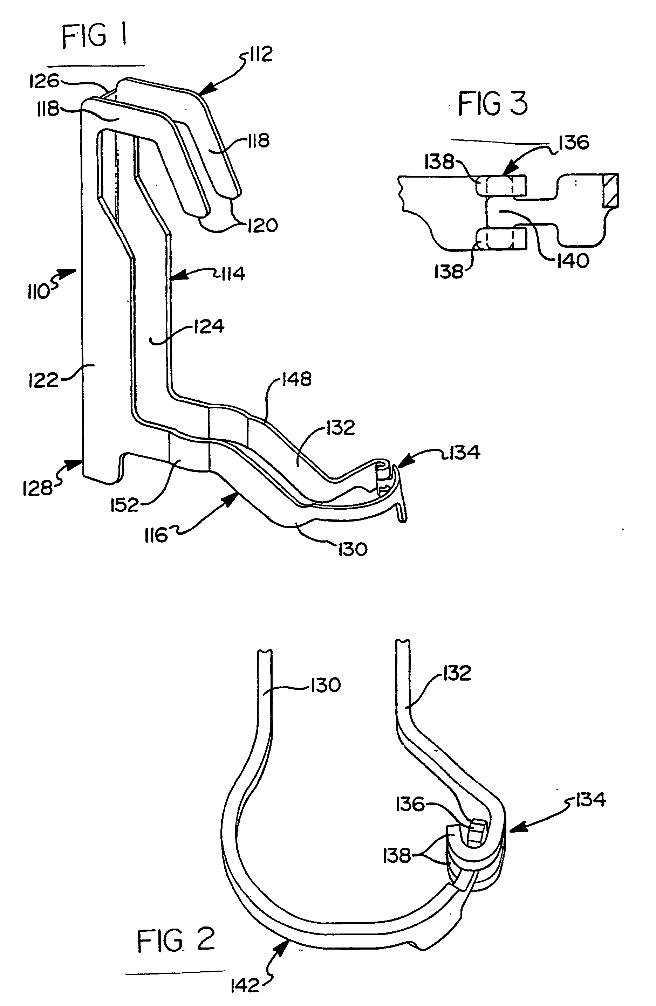

Figure 1 illustrates a preferred embodiment of the locking clip 110. Locking clip 110 includes retaining head 112, body portion 114 and base portion 116. In the preferred embodiment, the clip 110 is made from 301 stainless steel with a thickness of 0,813 to 0,914 mm (0.032 to 0.036 inches).

Retaining head 112 is comprised of arms 118 that are received about a male member and into a female connector housing such that abutting ends 120 on arms 118 are positioned to engage a portion of a male member to thereby maintain it in a preselected position within the female housing.

Body portion 114 includes sidewalls 122 and 124. An intermediate wall 126 connects sidewalls 122 and 124. Intermediate wall 126 provides a force application surface that is utilized in order to manipulate clip 110 relative to a connector housing as will be described in more detail below.

Extension 128 is provided on body portion 114 beyond base portion 116 in order to more greatly facilitate placing clip 110 into a locked position as will be described below. Base portion 116 includes spaced leg members 130 and 132.

As can best be seen in Figures 2 and 3, an engaging means 134 is provided for interlocking the ends of legs 130 and 132 that are most distal from body portion 114.

Engaging means 134 includes a generally T-shaped configuration 136 at the end of leg 130 and a pair of hooked finger members 138 at the end of leg 132. Of course, it will be appreciated that the T-shaped configuration 136 and the cooperating hooked fingers can be interchanged between legs 130 and 132. In the illustrated embodiment, hooked finger members 138 nestingly receive the crossbar 140 of T-shaped configuration 136. The curvature 142 on leg 130, which is a generally resilient member, biases crossbar 140 into the grasp of hooked fingers 138. Legs 130 and 132 are preferably a resilient, metal material such that they are manipulable relative to each other in order to engage or disengage fingers 138 and tee 136 as desired.

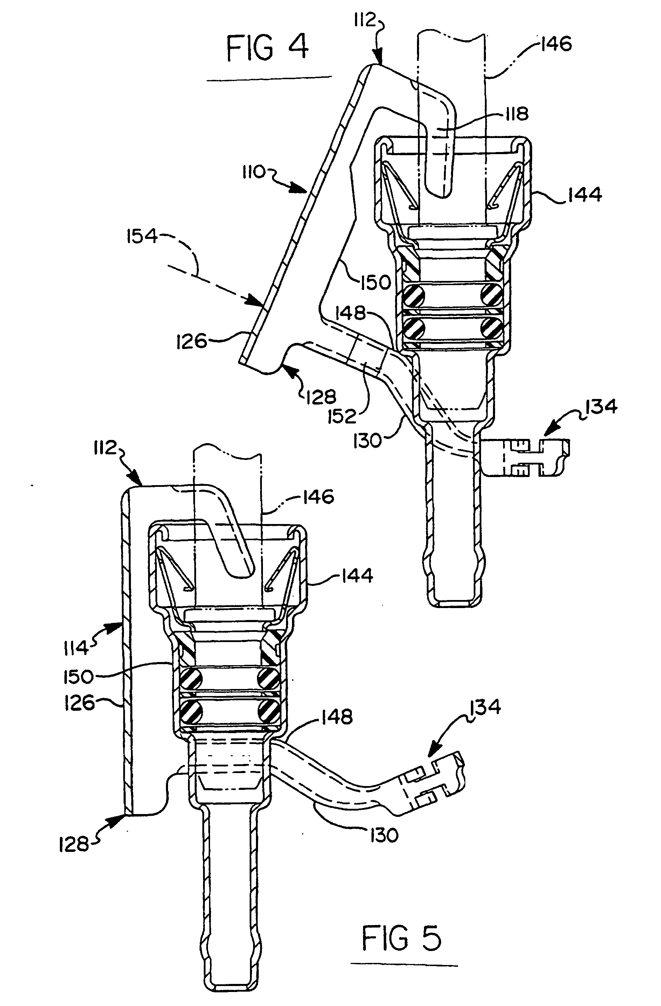

Referring now to Figures 4 and 5, clip 110 is shown as it would be applied to an assembly of a female connector housing 144 and a male member 146.

Similarly, male member 146 is essentially the same as male member 12, described above. Since there are a number of similarities of the invention described in EP 0 682 757 B1 and EP 0 690 967 B1 reference is made to these documents and only the differences will be detailed in the following discussion.

In order to place clip 110 about female housing connector 144, engaging means 134 must be initially disengaged. For example, if clip 110 were in the position illustrated in Figures 1 and 2, legs 130 and 132 would be manipulated relative to each other such that crossbar 140 is removed from the grasp of hooked finger members 148. As can be appreciated in Figure 2, for example, disengagement of crossbar 140 from the grasp of fingers 148 will result in a generally outward and arcuate movement of the curved portion 142 on leg 130 relative to leg 132. The resiliency inherent in legs 130 and 132 biases each of them outward or away from each other. With the ends of legs 130 and 132 separated, the legs can be placed generally about female housing connector 144. Then engaging means 134 preferably is utilized to couple the ends of legs 130 and 132 such that clip 110 is maintained about housing 144.

Next, retaining head 112 is positioned as generally illustrated in Figure 4 with arms 118 being received about male member 146. Arms 118 are preferably spaced apart a distance essentially equal to an outer diameter on male member 146 such that the inside surface of arms 118 slightly bias against the outer surface of male member 146.

With clip 110 in the position generally illustrated in Figure 4, cam surface 148 is positioned to cam along a portion of female housing connector 144. Clip 110 is manipulated in a generally rightward (according to the drawing) direction until the inner contour 150 of clip 110 is matingly received against the outer contour of female housing 144, as illustrated in Figure 5. Detents 152 are provided on legs 130 and 132 in order to facilitate maintaining clip 110 in the locked position illustrated in Figure 5.

Extension 128, which is provided on body portion 114 of clip 110, facilitates moving clip 110 into a locked position. The placement of extension 128 allows a user to have a point of force application centered over a line generally defined along or through legs 130 and 132, which facilitates easier camming of clip 110 relative to female housing 144. The presence of extension 128 allows a force applied along the force line illustrated at 154 in Figure 4. This provides an advantage over the embodiments illustrated and.discussed above because the application of force for camming the clip relative to the housing is more readily positioned in an optimum location on force application surface or wall 126.

As should be appreciated, clip 110 can be locked and unlocked without the need for tools. A quick connector designed according to this invention provides a redundant clip having superior pull-off strength that is easy to manufacture, easy to use, and does not require the use of tools. Additionally, the clip provides visual indication of a properly locked assembly and precludes outflow of fluid if there is improper. connection of the primary connector while overcoming the disadvantages of the prior art. The form of the invention illustrated and described herein is a preferred embodiment of these teachings. It is shown as an illustration of the. inventive concepts, rather than by way of limitation, as various modifications and alterations may be made within the scope of the appended claims.

## Claims

1. A locking clip (110) for use in retaining a male member (146) within a female connector (144), comprising a retaining head (112) for engaging a portion of said male member (146) when said male member (146) is positioned within said female connector (144) and a base portion (116) distal from said retaining head (112) and having spaced members (130, 132) that are received about an outer diameter of said female connector (144), said spaced members. (130, 132) having a cam surface (74) that cams.against said female connector (144) to facilitate placing said clip (110) into a locking position for retaining said male member (146) within said female connector (144), and a body portion (114) extending between said retaining head (112) and said base portion (116), wherein said spaced members (130, 132) each have a first end adjacent said body portion and a second end distal from said first end, **characterized in that** said second end of one of said spaced members has a generally T-shaped configuration (136) and wherein said second end of the other of said spaced members has a finger member (138) adapted to engage a portion of said generally T-shaped end (136) to interlock said second ends.

2. The locking clip of claim 1, wherein said body portion (114) has an extension (128) that extends beyond a point where said body (114) joins said spaced members (130, 132) in a direction generally away from said retaining head (112).

3. The locking clip of claim 2, wherein said extension (128) provides an extended force application surface, which facilitates manipulating said clip (110) relative to said female connector (144) into said locking position.

## Patentansprüche

1. Eine Verriegelungsklammer (110) zur Verwendung beim Halten eines männlichen Elementes (146) innerhalb eines weiblichen Verbinders (144), umfassend einen Haltekopf (112) für einen Eingriff mit einem Abschnitt des männlichen Elementes (146), wenn dieses männliche Element (146) in dem weiblichen Verbinder (144) positioniert ist, und einen Basisabschnitt (116) distal von dem Haltekopf (112), welcher beabstandete Elemente (130, 132) hat, die um einen äußeren Durchmesser des weiblichen Verbinders (144) herum angeordnet werden, wobei die beabstandeten Elemente (130, 132) eine Nockenfläche (148) haben, die im Nockeneingriff an dem weiblichen Verbinder (144) anliegt, um das Einsetzen der Klammer (110) in eine Verriegelungsposition zum Halten des männlichen Elementes (146) innerhalb des weiblichen Verbinders (144) zu erleichtern, sowie einen Körperabschnitt (114), welcher sich zwischen dem Haltekopf (112) und dem Basisabschnitt (116) erstreckt, wobei die beabstandeten Elemente (130, 132) jeweils ein erstes Ende angrenzend an den Körperabschnitt sowie ein zweites Ende distal von diesem ersten Ende aufweisen, **dadurch gekennzeichnet, daß** das zweite Ende von einem der beabstandeten Elemente eine allgemein T-förmige Konfiguration (136) hat, und wobei das zweite Ende des anderen dieser beabstandeten Elemente ein Fingerelement (138) aufweist, welches dazu ausgelegt ist, in einen Abschnitt des allgemein T-förmigen Endes (136) einzugreifen und die zweiten Enden zu verriegeln.

2. Verriegelungsklammer nach Anspruch, 1, bei welcher der Körperabschnitt (114) eine Fortsetzung (128) in eine Richtung allgemein von dem Haltekopf (112) fort aufweist, die sich über einen Punkt hinaus erstreckt, wo der Körper (114) mit den beabstandeten Elementen (130, 132) verbunden ist.

3. Verriegelungsklammer nach Anspruch 2, bei welcher die Fortsetzung (128) eine vorstehende Kraftaufbringungsfläche bildet, die es erleichtert, die Klammer (110) gegenüber dem weiblichen Verbinder (144) in die Verriegelungsposition zu bringen.

## Revendications

1. Agrafe de verrouillage (110) à utiliser pour retenir un élément mâle (146) dans un connecteur femelle (144), comprenant une tête de retenue (112) pour engager une partie dudit élément mâle (146) quand ledit élément mâle (146) est positionné dans ledit connecteur femelle (144) et une partie de base (116) à distance de ladite tête de retenue (112), et comportant des éléments écartés (130, 132) qui sont reçus autour d'un diamètre extérieur dudit connecteur femelle (144), lesdits éléments écartés (130, 132) ayant une surface de came (74) qui agit contre ledit connecteur femelle (144) pour faciliter la mise en place de ladite agrafe (110) jusque dans une position de verrouillage pour retenir ledit élément mâle (146) dans ledit connecteur femelle (144), et une partie de corps (114) qui s'étend entre ladite tête de retenue (112) et ladite partie de base (116), dans laquelle lesdits éléments écartés (130, 132) ont chacun une première extrémité adjacente à ladite partie de corps et une deuxième extrémité à distance de ladite première extrémité, **caractérisée en ce que** ladite deuxième extrémité de l'un desdits éléments écartés a une configuration générale en forme de T (136), et ladite deuxième extrémité de l'autre desdits éléments écartés comprend un élément en doigt (138) adapté à engager une partie de ladite extrémité généralement en forme de T (136) pour interverrouiller lesdites deuxièmes extrémités.

2. Agrafe de verrouillage selon la revendication 1, dans laquelle ladite partie de corps (114) comporte une extension (128) qui s'étend au-delà d'un point auquel ledit corps (114) rejoint lesdits éléments écartés (130, 132) dans une direction généralement en éloignement de ladite tête de retenue (112).

3. Agrafe de verrouillage selon la revendication 2, dans laquelle ladite extension (128) présente une surface d'application de force étendue, qui facilite la manipulation de ladite agrafe (110) par rapport audit connecteur femelle (144) jusque dans ladite position de verrouillage.
